# EUROPÄISCHE PATENTSCHRIFT

(11) **EP 2 471 251 B1**
(45) Veröffentlichungstag und Bekanntmachung des Hinweises auf die Patenterteilung: **14.06.2017**
(21) Anmeldenummer: 11766996.0
(22) Anmeldetag: 06.10.2011
(51) Int. Cl.: H04N 1/195, H04N 1/00, H04N 1/32

(54) **VERFAHREN UND EINRICHTUNG ZUM ERFASSEN UND BEDRUCKEN VON DOKUMENTEN**
METHOD AND DEVICE FOR CAPTURING AND PRINTING DOCUMENTS
PROCÉDÉ ET DISPOSITIF POUR SAISIR ET IMPRIMER DES DOCUMENTS

(30) Priorität: 07.10.2010 DE 102010048921
(43) Veröffentlichungstag der Anmeldung: 04.07.2012
(73) Patentinhaber: JDM Innovation GmbH, 71711 Murr (DE)
(72) Erfinder: KOEPF, Ulrich, 71672 Marbach (DE); STIRNER, Wolfgang, 74232 Abstatt (DE)
(74) Vertreter: DREISS Patentanwälte PartG mbB
(86) Internationale Anmeldenummer: PCT/EP2011/067445
(87) Internationale Veröffentlichungsnummer: WO 2012/045805

(56) Entgegenhaltungen:
- EP-A1- 1 583 347
- EP-A1- 1 638 309
- US-A- 5 760 926
- US-A1- 2006 001 920
- US-A1- 2010 118 327
- US-B1- 6 795 114
- US-B1- 6 891 644

## Beschreibung

Die vorliegende Erfindung bezieht sich auf ein Verfahren nach dem Oberbegriff des Anspruchs 1 und eine Einrichtung nach dem Oberbegriff des Anspruchs 10.
EP 1 583 347 A1 beschreibt wiederbeschreibbare Deckblätter zur Verwaltung einer Sammlung. US 5 760 926 A beschreibt eine Vorrichtung mit einem einzigen Papierpfad für Drucken, Kopieren, Scannen, und zum Senden und Empfangen von Faxen.

Üblicherweise werden papierne oder folienartige Dokumente in örtlich voneinander getrennten Vorrichtungen, das heißt Drucker und Scanner, bedruckt und gescannt. Mit anderen Worten, das Dokument, das bereits mit Informationen versehen ist, wird in einen Scanner eingelegt, um den Ausgangszustand festzuhalten, wird dann in einen Drucker eingelegt, um das Dokument mit Zusatzinformationen druckend zu versehen und wird dann abermals in den Scanner eingebracht, um den inhaltlichen Endzustand des Dokuments zu erfassen und abzuspeichern. Derart umständliche Maßnahmen werden beispielsweise bei von einem Arzt ausgefülltem Rezept durchgeführt, wenn die Informationen, die vom Arzt auf das Rezept gedruckt wurden, bspw. nur den verschriebenen Wirkstoff enthalten und in das abgegebene Medikament umgesetzt werden müssen. Weitere Informationen, wie Preis und Pharma-Zentral-Nummer, werden von einem Apotheker als Zusatzinformationen auf das Rezept gedruckt. Um diesen Vorgang nachverfolgen zu können, wird das Rezept sowohl in seiner ursprünglichen als auch in seiner mit der Zusatzinformation versehenen Form gespeichert.

Aufgabe der vorliegenden Erfindung ist es, ein Verfahren und eine Einrichtung der eingangs genannten Art zu schaffen, mittels dem beziehungsweise mittels der eine Vereinfachung der Ver- und Bearbeitung derartiger noch zu ergänzender Dokumente und deren speichernden Erfassung in den beiden unterschiedlichen Zuständen in einfacher Weise zu ermöglichen.

Zur Lösung dieser Aufgabe sind bei einem Verfahren zum Erfassen und Bedrucken von vorzugsweise papiernen Dokumenten der genannten Art die im Anspruch 1 angegebenen Merkmale und bei einer Einrichtung der vorstehend genannten Art die im Anspruch 10 angegebenen Merkmale vorgesehen.

Die erfindungsgemäßen Maßnahmen ermöglichen es, die einzelnen Schritte zur Verarbeitung und Bearbeitung solcher Dokumente in einem kombinierten Gerät vorzunehmen, ohne dass das Dokument mehrmals in die Hand genommen werden muss. Zu den anwendungstechnischen Vorteilen, kommen konstruktive Vorteile hinzu, die dadurch gegeben sind, dass verschiedene Bauteile, insbesondere die Transportbahn und das Einzugssystem des Druckers gleichzeitig auch für den Scanner Verwendung finden. Daraus ergibt sich eine sehr kompakte Einheit aus Drucker und Scanner.

Gemäß den Merkmalen des Anspruchs 2 ist es darüber hinaus möglich, das Dokument anhand eines oder mehrerer Merkmale in bestimmte Kategorien einzusortieren.

In weiterer Ausgestaltung kann dabei die entsprechende Zusatzinformation gemäß den Merkmalen nach Anspruch 4 vorgegeben werden. Insbesondere kann vorgesehen sein, dass eine Zusatzinformation, die auf das Dokument aufzudrucken ist, über eine Tastatur von Hand eingegeben wird oder aus einem Speicher ausgelesen wird.

Gemäß den Merkmalen nach Anspruch 5 wird das Dokument in der einzigen Transportbahn entsprechend den durchzuführenden Schritten bewegt.

Vorteilhafte Ausgestaltungen hinsichtlich der Art und Weise der Führung der Dokumente und deren Bewegungsabläufe innerhalb der einzigen Transportbahn zwischen Drucker und Scanner ergeben sich aus den Merkmalen eines der Ansprüche 6 bis 8.

Eine vorteilhafte Ausgestaltung für die Transportbahn und den Aufsichtbereich ergibt sich nach den Merkmalen des Anspruchs 11.

Weitere vorteilhafte Ausgestaltungen ergeben sich durch die Merkmale nach Anspruch 13 und/oder 14.

Die vorliegende Erfindung kann besonders vorteilhaft in Kassen für Apotheken eingesetzt werden.

Bei einer bevorzugten Ausführungsform ist vorgesehen, dass der erste Schritt des Scannens bzw. des berührungsfreien Abtastens mittels eines optischen Flächensensors, insbesondere eines CMOS-Bildsensors oder eines CCD-Bildsensors, durchgeführt wird, wobei der Flächensensor über eine im wesentlichen matrixartige Anordnung einer Vielzahl von Bildpunkten verfügt, die in Zeilen und Spalten angeordnet sind, und wobei vorzugsweise jeweils nur eine oder wenige Bildpunktzeilen des Flächensensors eingelesen werden, bevor das Dokument um einen vorgebbaren Vorschub in der Transportbahn weiterbewegt wird, um eine nachfolgende Dokumentzeile zu scannen bzw. abzutasten.

Das gesamte Dokument wird somit im wesentlichen zeilenweise gescannt und dabei schrittweise oder kontinuierlich in der Transportbahn in Vorschubrichtung weiterbewegt, um jeweils einen nächsten Bereich des Dokuments in den Erfassungsbereich des Flächensensors zu bringen.

Weitere Einzelheiten der Erfindung sind der folgenden Beschreibung zu entnehmen, in der die Erfindung anhand des in der Zeichnung dargestellten Ausführungsbeispieles näher beschrieben und erläutert ist. Es zeigen:
- Figur 1: einen Querschnitt durch eine mit einem Drucker und mit einem Scanner versehene Einrichtung gemäß einem bevorzugten Ausführungsbeispiel vorliegender Erfindung,
- Figur 2: eine Draufsicht gemäß Pfeil II der Figur 1, jedoch bei einem aus dem Blickfeld eines Scannerelementes verfahrenen Druckerelement,
- Figur 3: schematisch eine Seitenansicht einer weiteren Ausführungsform.

Die in der Zeichnung gemäß einem bevorzugten Ausführungsbeispiel dargestellte Einrichtung 10 ist eine kombinierte Einheit 14 aus Drucker 11 und Scanner 12 zum wahlweisen Bedrucken und Scannen eines

Dokuments 13 in Form eines leeren oder bereits bedruckten Papiers, Folie und dergleichen. Dabei sind innerhalb der Einheit 14 dem Drucker 11 und dem Scanner 12 gemeinsame Bauteile zugeordnet, wie beispielsweise diejenigen den hin- und hergehenden Transport der Dokumente 13 bewirkenden und die eine Dokumenten-Transportbahn 15 begrenzenden Bauteile. Dabei ist insbesondere vorgesehen, dass der Grundbaustein dieser kombinierten Einheit 14 durch den Drucker 11 gebildet ist, in den der Scanner 12 mit seinen zusätzlichen Bauteilen integriert ist. Es versteht sich, dass die Einheit 14 auch in der Form aufgebaut sein kann, dass ein mit einer Transportbahn 15 versehender berührungsloser Scanner 12 als Hauptbaustein einen mit seinen zusätzlichen Bauteilen integrierten Drucker 11 aufnimmt.

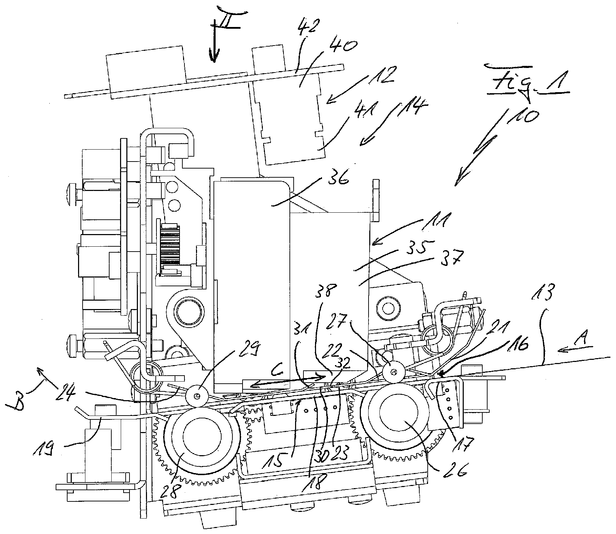

Die Drucker/Scanner-Einheit 14 der Einrichtung 10 besitzt, wie erwähnt, die Transportbahn 15, die durch mehrere gemäß Figur 1 in geringem Abstand übereinander angeordnete untere und obere Führungsbleche 17 bis 19 beziehungsweise 21 bis 24 einer Führungsblechanordnung begrenzt ist. Die Transportbahn 15 ist ferner durch in Transport-Vorlaufrichtung A vordere und hintere Rollenpaare aus unterer durchmessergroßen Rolle 26 beziehungsweise 28 und oberer durchmesserkleiner Rolle 27 beziehungsweise 29 gebildet, die zwischen den unteren benachbarten Führungsblechen 17 und 18 beziehungsweise 18 und 19 angeordnet sind. Das vordere Rollenpaar 26, 27 bildet gleichzeitig den Dokumenteneinzug und -auswurf.

Ein Dokument 13 wird in Vorlaufrichtung gemäß Pfeil A zwischen das untere und obere Führungsblech 17, 21 eingebracht und von dem vorderen Rollenpaar 26, 27 erfasst und ggf. weiter zwischen die Anordnung aus den Führungsblechen 18 und 22, 23 zum hinteren Rollenpaar 28, 29 transportiert, wobei beispielsweise die unteren Rollen 26 und 28 der Rollenpaare synchron angetrieben sind.

Über das endseitige untere Führungsblech 19 kann bei einem längeren Dokument 13 in nicht dargestellter Weise der überstehende Abschnitt des Dokuments 13 zu einer Führungsbahnverlängerung gemäß Pfeil B bewegt wird. Die Rollenpaare 26 und 27 sowie 28 und 29 sind derart ansteuerbar, dass sie in beide Drehrichtungen zur hin- und hergehenden Bewegung des Dokuments 13 gemäß Doppelpfeil C angetrieben werden können. Wie erwähnt, ist die Transportbahn 15 sowohl dem Drucker 11 als auch dem Scanner 12 zugeordnet bzw. Teil sowohl des Druckers 11 als auch des Scanners 12.

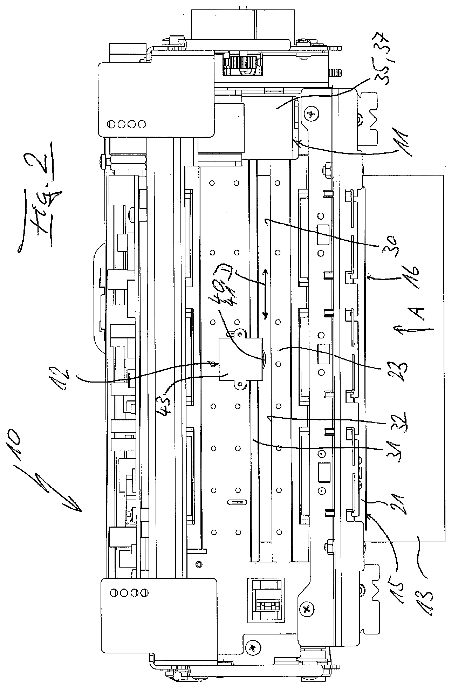

Wie insbesondere aus Figur 2 ersichtlich ist, besitzt das obere mittige Führungsblech 23 einen zur hin- und hergehenden Bewegungsrichtung C quer verlaufenden Schlitz 30, der einen Aufsichtbereich bildet, den das Dokument 13 in beiden, d.h. Vorlauf- und Rücklauf-Richtungen durchlaufen kann, um das Dokument 13 entweder von einem Druckerelement 35 oder von einem Scannerelement 40 zu erfassen. Der Querschlitz 30 besitzt beim Ausführungsbeispiel eine derartige Breite, dass das Dokument 13 zeilenweise bearbeitet (bedruckt) beziehungsweise erfasst werden kann. Es versteht sich, dass der Querschlitz 30 auch eine Breite zur mehrzeiligen Bearbeitung (Bedruckung) beziehungsweise Erfassung des Dokuments 13 besitzen kann. Beim Ausführungsbeispiel ist, wie erwähnt, der Querschlitz 30 dem Druckerelement 35 sowie dem Scannerelement 40 zugeordnet. Der Querschlitz 30 ist einenends von einer freigeschnittenen Längskante 32 des oberen mittleren Führungsblechs 23 und in Richtung gemäß Pfeil A andernends von einem hochgebogenen Abschnitt 31 des oberen mittleren Führungsblechs 23 begrenzt.

Das Druckerelement 35 des Druckers 11 ist als Tintenstrahldruckerelement ausgebildet und besitzt einen gemäß Figur 2 in Richtung des Doppelpfeiles D hin- und herverfahrbaren Wagen 36, der mit einer Druckerpatrone 37 auswechselbar bestückt ist. Der Wagen 36 mit Druckerpatrone 37 ist derart an der Einheit 14 verfahrbar gehalten, dass der Druckerkopf 38 an der Patrone 37 über und längs des Querschlitzes 30 bewegbar ist. Dadurch ist ein zeilenweises (oder mehrzeiliges) Bedrucken des Dokumentes 13 möglich. Die Ruheposition des Druckerwagens 36 befindet sich gemäß Figur 2 an einer, hier der rechten Seite der Einheit 14 außerhalb des Querschlitzes 30.

Das Scannerelement 40 des Scanners 12 ist durch eine Kamera, vorzugsweise eine Zeilenkamera 41 gebildet, die an einer auskragenden Platine 42 oberhalb des Druckerelements 35 über eine Befestigungsplatte 43 ortsfest gehalten ist. Die Zeilenkamera 41 befindet sich oberhalb der

Längsmitte des Querschlitzes 30, der über seine gesamte Länge von der Zeilenkamera 41 erfasst wird. Es versteht sich, dass die Zeilenkamera 41 derart angeordnet ist, dass das Druckerelement 35 unterhalb der Zeilenkamera 41 hin- und herbewegbar ist. Wird jedoch der Scanner 12 in Betrieb genommen, wird das Druckerelement 35 des Druckers 11 abgeschaltet und in seiner vorgenannten Ruheposition außerhalb des Querschlitzes 30 und damit außerhalb des Blickfeldes der Zeilenkamera 41 angehalten.

Wie erwähnt, dient die Einheit 14 der Einrichtung 10 dazu, Dokumente, wie beispielsweise von einem Arzt ausgestellte Rezepte 13 in ursprünglich ausgefüllter Form einzuscannen, das heißt berührungsfrei abzutasten, und darüber hinaus zu speichern sowie gegebenenfalls zumindest teilweise inhaltlich zu erfassen, sowie das Dokument beziehungsweise Rezept 13 mit mindestens einer weiteren Information zu bedrucken und ferner dazu, das inhaltlich ergänzte Dokument beziehungsweise Rezept 13 erneut einzuscannen, das heißt berührungsfrei abzutasten, und auch zu speichern.

Der Vorgang bzw. das Verfahren hierzu ist gemäß vorliegender Erfindung folgender/folgendes:
Das Dokument beziehungsweise Rezept 13 wird gemäß Pfeil A in eine Einführungsöffnung 16 gesteckt und von dem ersten Rollenpaar 26, 27 ergriffen. In einem ersten Schritt wird das mit seiner beschrifteten Seite nach oben weisende Dokument beziehungsweise Rezept 13 unter dem Querschlitz zeilenweise gescannt, d.h. berührungsfrei abgetastet, und abgespeichert. Mit diesem zeilenweisen Scannen des Dokuments beziehungsweise Rezepts 13 wird ein bestimmter festgelegter inhaltlicher Teil, bspw. die Krankenkasse erfasst und in einem Speicher durch Vergleich mit im Speicher vorgegebenen bzw. abgelegten Daten in eine bestimmte Kategorie sortiert.

In einem zweiten Schritt wird auf das Dokument beziehungsweise Rezept 13 eine Zusatzinformation gedruckt, die beispielsweise darin besteht, dass einem vom Arzt bestimmten und auf dem Rezept 13 aufgedruckten Wirkstoff vom Apotheker ein bestimmtes Medikament zugeordnet wird. Der Name dieses Medikaments wird als Zusatzinformation auf das Rezept 13 aufgedruckt, in dem diese Zusatzinformation entweder vom Apotheker mittels einer Tastatur eingegeben und vom Druckerelement 35 auf das Rezept 13 übertragen wird oder dadurch, dass aus einem in der Einrichtung 10 vorhandenen Speicher diesem Wirkstoff automatisch und gegebenenfalls in Abhängigkeit von der auf dem Rezept ersichtlichen Krankenkasse ein entsprechendes Medikament zugeordnet wird. Zwischen dem ersten Schritt und dem zweiten Schritt wird das Dokument beziehungsweise Rezept 13 nach dem Scannen im Rücklauf in Richtung der Einführungsöffnung 16 bewegt und dort in Warteposition solange gehalten, bis dem Druckerelement 35 ein entsprechender Befehl erteilt worden ist. Daraufhin wird das Dokument beziehungsweise Rezept 13 im Vorlauf in Druckerposition zeilenweise unter den Querschlitz 30 gebracht.

In einem dritten Schritt wird das durch die Zusatzinformation ergänzte Dokument beziehungsweise Rezept 13 nochmals gescannt, also berührungsfrei abgetastet und erneut in einen Speicher abgelegt. Der Vorgang zwischen dem zweiten und dem dritten Schritt kann entweder wie vorstehend hinsichtlich des Vorgangs zwischen erstem und zweitem Schritt beschrieben, verwirklicht werden, oder das Dokument beziehungsweise Rezept 13 wird in Vorlauf-Richtung weg von der Einführungsöffnung 16 in eine Ruheposition bewegt, aus der das Dokument beziehungsweise Rezept 13 zurück zur Einführungsöffnung 16, nach dem das Scannen im Rücklauf erfolgt ist.

Gemäß einem weiteren Ausführungsbeispiel kann das Drucken einer oder mehrerer Zusatzinformationen auf dem Rezept 13 im zweiten Schritt und das Einscannen des mit der Zusatzinformation versehenen Rezepts 13 im dritten Schritt in der Weise erfolgen, dass dies in versetzter und damit überlagerter Weise zeilenweise vorgenommen wird, indem dort, wo keine Zusatzinformation aufgedruckt wird, das Einscannen sofort erfolgen kann, und dort, wo eine Zusatzinformation aufgedruckt wird, zunächst das Bedrucken erfolgt und dann in derselben Zeile das Einscannen und so weiter. Somit erfolgt ein zeilenweiser Versatz des zweiten und dritten Schrittes.

Es versteht sich, dass statt der vorgenannten Rezepte auch großformatigere Dokumente 13 verwendet werden können, die in nicht im einzelnen dargestellter Weise über das hintere untere Führungsblech 19 hinausgeführt und innerhalb eines nicht dargestellten Gehäuses der Einheit 14 in Warteposition gebracht wird. Auch in diesem Falle erfolgt keine Zwischenentnahme eines Dokuments 13, das einmal eingeführt den oben genannten Schritten unterworfen wird und erst danach über die Einführungsöffnung 16 wieder ausgeworfen bzw. entnommen wird.

Eine derartige Einrichtung 10, die aus einer Einheit 14 aus in einen Drucker 11 integrierten Scanner 12 aufgebaut ist, kann entweder als externe Einrichtung 10 mittels eines Kabels an einen PC oder einen Laptop angeschlossen werden oder sie ist als Einheit 14 in eine in Apotheken verwendete Kasse, die mit einer Tastatur versehen ist und gleichzeitig ein Bonausgabesystem besitzt, eingebaut.

Bei einer weiteren vorteilhaften Ausführungsform ist vorgesehen, dass eine Zusatzinformation, die auf das Dokument aufzudrucken ist, über eine Tastatur von Hand eingegeben wird.

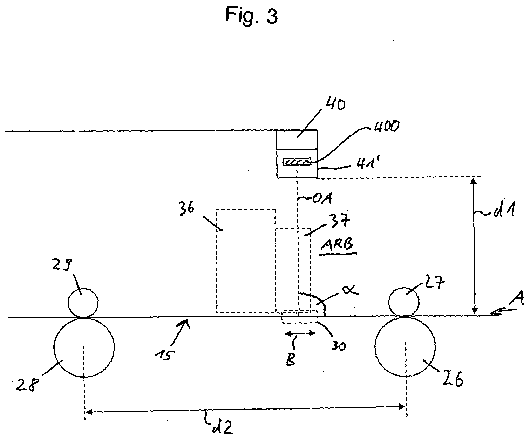

Figur 3 zeigt schematisch eine weitere Ausführungsform der Erfindung mit einer zu Fig. 1 vergleichbaren Seitenansicht der Einrichtung 10.

Bei der in Fig. 3 abgebildeten Erfindungsvariante weist das Scannerelement 40 eine Kamera 41' auf, die über einen optischen Flächensensor 400 verfügt. Der optische Flächensensor 400 ist beispielsweise als CMOS-Bildsensor oder als CCD-Bildsensor ausgebildet und verfügt über eine im wesentlichen matrixartige Anordnung einer Vielzahl von Bildpunkten (Pixel), die in Zeilen und Spalten angeordnet sind. Die Sensorzeilen erstrecken sich in Fig. 3 senkrecht zur Zeichenebene der Fig. 3, die Sensorspalten i.w. parallel zur Transportbahn 15 bzw. Bewegungsrichtung A.

Prinzipiell kann die Kamera 41' damit einen der Bildpunktanzahl (Zahl der Zeilen multipliziert mit der Zahl der Spalten) entsprechenden Pixelbereich aufnehmen und als Kamerabild bereitstellen. Besonders vorteilhaft wird bei der vorliegenden Ausführungsform jedoch nur eine Zeile des Flächensensors 400 oder wenige Zeilen verwendet, um einen entsprechenden Scanbereich des in der Transportbahn 15 befindlichen Dokuments zu scannen.

Um das ganze Dokument, z.B. Rezept, zu scannen, ist es erforderlich, das Dokument schrittweise oder kontinuierlich um einen vorgebbaren Vorschub in der Transportbahn 15 weiterzubewegen, also in Fig. 3 z.B. von rechts nach links. Nach jedem Vorschub befindet sich ein entsprechend anderer Zeilenbereich des Dokuments in dem Aufsichtbereich 30, und dann kann eine oder mehrere Sensorzeilen des Flächensensors 400 erfasst und verarbeitet werden, bevor eine neuerlicher Vorschub erfolgt. Dieser Prozess wird solange wiederholt, bis der gewünschten Flächenbereich des Dokuments eingescannt und aus den einzelnen Scanzeilen z.B. in Form eines Kamerabilds aggregiert worden ist.

Besonders vorteilhaft ist bei der Ausführungsform der Fig. 3 die Kamera 41' so relativ zu der Transportbahn 15 angeordnet, dass ihre optische Achse OA im wesentlichen senkrecht steht zu der Oberfläche der Transportbahn 15. Der Winkel α weist bevorzugt einen Wertebereich von etwa 70° bis etwa 110° auf, kleinere Abweichungen von der exakten Orthogonalität zwischen den Komponenten OA, 15 sind also zugelassen. Durch diese Ausrichtung werden optische Verzerrungen, wie sie bei extremen Winkeln α>110° und α<70° auftreten, vermieden, so dass weniger Rechenaufwand erforderlich ist um die gescannten Bildzeilen für eine nachfolgende Texterkennung zu einem Gesamtbild (Kamerabild) zusammenzusetzen und rechnerisch aufzubereiten, insbesondere zu entzerren.

Dadurch, dass bei der vorliegenden Erfindungsvariante je Vorschubschritt nur eine Sensorzeile an Bilddaten oder nur wenige Sensorzeilen ausgewertet werden, erhöht sich zunächst die Anzahl der Scanvorgänge bzw. zugehörigen Vorschubschritte.

Allerdings bietet die Beschränkung auf die Verwendung einer oder weniger Sensorzeilen je Vorschubposition den wesentliche Vorteil, dass stets diejenige Sensorzeile(n) für das Scannen verwendet werden kann, für welche eine optimale Erfassung mit geringstmöglichen Verzerrungen gegeben ist. Durch den an sich bekannten Abbildungsprozess des in dem Aufsichtbereich 30 befindlichen Dokumentenabschnitts wird zwar der ganze Aufsichtbereich 30 an sich auf den Sensor 400 abgebildet, so dass unter Ausnutzung der gesamten Pixelzahl (insb. Zeilenzahl) eine dem Aufsichtbereich 30 entsprechende Bilddatenmenge eingelesen werden könnte. Allerdings ist die Qualität der optischen Abbildung des Scanbereichs bzw. Aufsichtbereichs 30 auf den Sensor 400 nur für einige wenige Sensorzeilen 400 (oder nur eine einzige) hinreichend gut für eine effiziente nachfolgende Bildzusammenstellung und einen anschließenden Schritt der Texterkennung. Andere Sensorzeilen erhalten durch ihre andere Lage im Raum bezüglich des Strahlengangs bzw. der optischen Achse OA eine deutlich schlechtere optische Abbildung, wodurch die Bildqualität dieser Sensorzeilen viel schlechter ist als die der "optimalen" Sensorzeile.

Daher wird bei der vorliegenden Erfindungsvariante je Vorschubschritt nur eine oder wenige Sensorzeilen, nämlich die mit der besten Abbildungsqualität, verwendet, die anderen Sensorzeilen jedoch nicht. Nach dem Scannen dieser besten Sensorzeilen erfolgt ein Vorschub, so dass ein weiterer, noch zu scannender Bereich des Dokuments auf die optimalen Sensorzeilen abgebildet wird und wiederum eingescannt werden kann.

Die "optimalen Sensorzeilen" variieren in Abhängigkeit von Fertigungsparametern, Umweltbedingungen (Temperatur, Vibrationen usw.) und können erfindungsgemäß vorteilhaft im Rahmen eines Kalibrierprozesses mit einer Scanvorlage bekannten Inhalts (z.B. Linienmuster/Gitter mit bekanntem Strichabstand usw.) ermittelt werden. Die Kalibrierung kann vorteilhaft periodisch erfolgen, beispielsweise automatisch ausgelöst werden, sobald die Kamera 41' die vorbekannte Referenz-Scanvorlage erfasst und eine Steuerung der Einrichtung 10 diese Vorlage erkennt.

Durch die Verwendung nur weniger Zeilen eines an sich eine Vielzahl von Zeilen aufweisenden Flächensensors 400 kann vorteilhaft eine optimale Erfassungsqualität für das Scannen sichergestellt werden, ohne dass der Aufbau der Einrichtung 10 hochpräzise und langzeitstabil erfolgen müsste, wodurch sich die Fertigungskosten senken lassen. Vielmehr kann bei Bedarf eine Kalibrierung durchführt werden, und die dann optimal bezüglich des Aufsichtbereichs 30 angeordneten Sensorzeilen werden fortan für das Scannen verwendet.

Bei einer weiteren vorteilhaften Ausführungsform ist vorgesehen, dass die Kamera 41' mit ihrer optischen Achse OA im wesentlichen senkrecht zu der Transportbahn 15, insbesondere dem Aufsichtbereich 30, ausgerichtet ist, wobei sie bevorzugt um einen so großen Scanabstand d1 von der Transportbahn 15 entfernt angeordnet ist, dass zwischen der Kamera 41' und der Transportbahn 15 ein Arbeitsbereich ARB definiert ist, in dem sich ein Wagen 36 eines Druckers über die Transportbahn 15, insbesondere den Aufsichtbereich 30, bewegen kann. Bei einer bevorzugten Ausführungsform beträgt der Scanabstand d1 etwa 5 cm bis etwa 10 cm. Dadurch können vorteilhaft sowohl Scanner als auch Drucker denselben Aufsichtbereich 30 nutzen, was eine insbesondere entlang der Transport-Vorlaufrichtung A klein bauende Konfiguration ergibt.

Ferner muss nur ein Aufsichtbereich 30 in den Führungsblechen für die Transportbahn 15 vorgesehen werden, was die konstruktive Komplexität der Transportbahn 15 vereinfacht. Beispielsweise könnte die Transportbahn 15 jenseits des Aufsichtbereichs 30, in Figur 3 insbesondere links davon, eine starke Krümmung aufweisen, um bereits gescannte Dokumentbereich temporär aufzunehmen und zu führen. Dies ist bei herkömmlichen Systemen nicht möglich, die die Elemente Scanner, Drucker in Transport-Vorlaufrichtung A hintereinander angeordnet haben, und nicht "übereinander" wie bei der vorliegenden Erfindungsvariante.

Durch den Scanabstand d1 ist vorteilhaft sichergestellt, dass ein aufgedrucktes Medium wie z.B. Tinte nicht verschmiert, da die Kamera 41' - entgegen herkömmlichen Systemen - gar keinen Kontakt zu dem in der Transportbahn geführten Papier hat. Gleichzeitig kann sich der Druckkopf bzw. Wagen 36 und sonstige bewegliche Teile 37, .. des Druckers unter der Kamera 41' hin- und herbewegen in dem Arbeitsraum ARB.

Bei einer weiteren vorteilhaften Ausführungsform ist die Transportbahn 15 - insbesondere entlang der Richtung A - im wesentlichen vollständig geschlossen (Oberseite und Unterseite in Fig. 3), mit Ausnahme des Aufsichtbereichs 30, der durch eine entsprechende Ausnehmung in einer Oberseite der Führungsblechanordnung definiert ist. Durch diese fast vollständig geschlossene Konfiguration kann auch geknittertes Papier, wie es bei Rezepten, die vor dem Scannen vielfach manuell gehandhabt werden (Arzt, Patient, Apotheke), der Fall ist, sicher aufgenommen und hin- und hertransportiert werden, um einen definierten Vorschub für das Drucken und/oder Scannen ohne Papierstau oder Drehung bzw. Knittern des Papiers in der Bahn 15 zu bewirken. Die vorstehend beschriebene Auswertung jeweils nur einer oder weniger Sensorzeilen je Vorschubschritt ist auch im Falle von geknitterten Vorlagen sehr vorteilhaft, da jeweils nur ein sehr geringer Dokumentbereich (entsprechend einer bzw. weniger Sensorzeilen in Transportrichtung A) erfasst wird und Abtastfehler aufgrund von nichtkonstanten Vorlagenabständen vermindert werden.

Bei einer weiteren vorteilhaften Ausführungsform ist die Führungsblechanordnung derart ausgebildet, dass entlang der Transportrichtung A wenigstens über den Rollenabstand d2 eine - bis auf die Ausnahme des Aufsichtbereichs 30 in der Oberseite der Führungsblechanordnung - geschlossene Führungsbahn gebildet ist. Insbesondere umfasst der Aufsichtbereich 30 in Transportrichtung A eine Breite B von maximal etwa 10% des Rollenabstands d2, vorzugsweise maximal etwa 4%.

Bei einer vorteilhaften Ausführungsform des Verfahrens ist vorgesehen, ein eingelegtes Dokument zunächst zu scannen, und dann ggf. zu bedrucken. Nach dem Bedrucken erfolgt kein zweiter Scanvorgang, sondern mit den gedruckten Daten korrespondierende Informationen werden direkt elektronisch in das von dem Scanner bzw. der Kamera 41, 41' erhaltene Kamerabild integriert, beispielsweise in Form von Metadaten oder zusätzlicher "virtueller" Bildzeilen und/oder Spalten, welche Anstelle von Bildinformationen die Druckdaten enthalten. Die Daten können auch digital signiert und/oder verschlüsselt werden.

Bei einer weiteren vorteilhaften Ausführungsform kann eine Linearisierung von optischen Verzerrungen, welche durch eine Kameraoptik, z.B. Linse, und generell die Abbildungsparameter, bedingt sind entweder durch eine entsprechende Anpassung der Optik oder eine Zusatzoptik und/oder rechnerisch, z.B. in einer Steuerung der Einrichtung 10 erfolgen.

Bevorzugt kann der Flächensensor 400 ferner als Farbsensor ausgebildet sein, der demzufolge mindestens zwei Farbkanäle, vorzugsweise drei, z.B. für die Grundfarben Rot, Grün, Blau, aufweist. Alternativ sind auch separate optische Sensoren je Farbkanal denkbar oder ein einkanaliger Sensor in der Verwendung mit einer RGB Beleuchtung, die eine Vorlage abwechselnd mit Licht unterschiedlicher (Grund-)Farbe beleuchtet.

Eine Steuerung des Scanners bzw. der Kamera 41' ist bei einer Erfindungsvariante bevorzugt so ausgebildet, dass sie einen Hintergrundfarbwert eines gescannten Dokuments, z.B. die Farbe Rosa oder Blau eine gescannten Rezepts, erkennt und diesen Hintergrundfarbwert bei der Auswertung der gescannten Daten berücksichtigt.

Eine derartige Berücksichtigung kann beispielsweise in Form einer Subtraktion des Hintergrundfarbwerts von den Scandaten derart erfolgen, dass die auf diese Weise bearbeiteten Scandaten eine vorgebbare Referenzfarbe (z.B. Weiß) als Hintergrundfarbe aufweisen, wodurch sich eine anschließende Texterkennung Untersuchungen der Anmelderin zufolge vereinfacht.

Keine wesentlichen zu scannende Informationen enthaltende Elemente der Scanvorlage wie z.B. Umrahmungen und Vordrucktexte mit an sich bekanntem oder für die maschinelle Weiterverarbeitung unwichtigem Inhalt (z.B. Feldüberschriften zur Information im Falle einer manuellen Eintragung von Daten usw.) können einer weiteren Ausführungsform zufolge ebenfalls vorteilhaft im Rahmen einer Vorverarbeitung der Scandaten eliminiert werden, so dass eine nachfolgende Texterkennung sich weiter vereinfacht. Zur Erkennung von zu eliminierenden Linien auf dem gescannten Rezept kann eine Steuerung des Scanners bzw. der Kamera 41, 41' beispielsweise eine Hough-Transformation oder andere geeignete Algorithmen ausführen.

Die erfindungsgemäße Einrichtung 10 kann einer weiteren Variante zufolge vorteilhaft eine Datenschnittstelle, z.B. USB (universal serial bus) aufweisen, so dass die Drucker-Scanner Kombination 10 an jeden PC anschließbar ist. Drucker und Scanner bzw. Kamera 41, 41' der Einrichtung 10 werden z.B. von derselben Steuerung (Steuereinheit), also insbesondere ohne den optional anschließbaren PC, gesteuert. Die Steuerung ist bevorzugt so ausgebildet, dass sie die Scandaten aufbereitet, insbesondere hinsichtlich der Korrektur von Verzerrungen, Vorverarbeitung (nichtweißen Hintergrund und/oder geometrische Elemente wie Linien, Kreise, Rahmen eliminieren), und liefert vorteilhaft verwertbare Grunddaten für die OCR, die an dem anschließbaren PC erfolgen kann. Bei der Verwendung der Einrichtung 10 in einer Apothekenkasse kann die Steuerung 10 vorteilhaft auch zusammen mit dem PC in demselben Kassengehäuse integriert sein.

Bei einer weiteren vorteilhaften Ausführungsform kann anstelle eines Flächensensors auch ein Zeilensensor zur Ausbildung der Kamera bzw. des Scanners verwendet werden.

## Patentansprüche

1. Verfahren zum Erfassen und Bedrucken von vorzugsweise papiernen Dokumenten (13), **dadurch gekennzeichnet, dass** das Dokument (13) nach dem Einführen in eine kombinierte Drucker/Scanner-Einrichtung (10) in einem ersten Schritt gescannt , in einem zweiten Schritt mit einer Zusatzinformation bedruckt wird und in einem darauffolgenden dritten Schritt nochmals gescannt und abgespeichert wird, wobei das Dokument (13) in den einzelnen Schritten dieselbe Transportbahn (15) vor und rücklaufend hin und zurück durchläuft, wobei eine Kamera (41') mit ihrer optischen Achse (OA) im wesentlichen senkrecht zu der Transportbahn (15), insbesondere dem Aufsichtbereich (30), ausgerichtet wird, wobei die Kamera um einen so großen Scanabstand (d1) von der Transportbahn (15) und hinter einem Druckerelement (35) eines Druckers (11) entfernt angeordnet wird, dass zwischen der Kamera (41') und der Transportbahn (15) ein Arbeitsbereich (ARB) definiert wird, in dem sich ein Wagen (36) des Druckers (11) über die Transportbahn (15), insbesondere den Aufsichtbereich (30), bewegt.

2. Verfahren nach Anspruch 1, **dadurch gekennzeichnet, dass** im ersten Schritt das Dokument (13) inhaltlich zumindest teilweise erfasst und abgespeichert wird.

3. Verfahren nach Anspruch 1 oder 2, wobei der erste Schritt des Scannens bzw. des berührungsfreien Abtastens mittels eines optischen Flächensensors, insbesondere eines CMOS-Bildsensors oder eines CCD-Bildsensors, durchgeführt wird, wobei der Flächensensor über eine im wesentlichen matrixartige Anordnung einer Vielzahl von Bildpunkten verfügt, die in Zeilen und Spalten angeordnet sind, und wobei vorzugsweise jeweils nur eine oder wenige Bildpunktzeilen eingelesen werden, bevor das Dokument um einen vorgebbaren Vorschub in der Transportbahn weiterbewegt wird, um eine nachfolgende Dokumentzeile zu scannen bzw. abzutasten.

4. Verfahren nach den Ansprüchen 1 und 2, **dadurch gekennzeichnet, dass** die Zusatzinformation aus einem Speicher ausgelesen wird, in welchem verschiedene Zusatzinformationen verschiedenen im ersten Schritt erfassten Inhalten zugeordnet sind.

5. Verfahren nach mindestens einem der vorhergehenden Ansprüche, **dadurch gekennzeichnet, dass** das Dokument (13) zwischen den einzelnen Schritten vor- und rücklaufend hin- und herbewegt wird.

6. Verfahren nach Anspruch 5, **dadurch gekennzeichnet, dass** das Dokument (13) im ersten Schritt im Vorlauf vorzugsweise zeilenweise gescannt und im zweiten Schritt im Rücklauf vorzugsweise zeilenweise bedruckt wird und im dritten Schritt im Vorlauf vorzugsweise zeilenweise gescannt und im Rücklauf ausgeworfen wird.

7. Verfahren nach Anspruch 5, **dadurch gekennzeichnet, dass** das Dokument (13) im ersten Schritt im Vorlauf vorzugsweise zeilenweise gescannt und danach im Rücklauf in eine Warteposition transportiert wird und im zweiten Schritt im Vorlauf bedruckt und im dritten Schritt im Rücklauf gescannt und ausgeworfen wird.

8. Verfahren nach Anspruch 5, **dadurch gekennzeichnet, dass** das Dokument (13) im zweiten und dritten Schritt in zeilenweisem Versatz gedruckt und gescannt wird.

9. Einrichtung, bei der in der Dokumenten-Transportbahn (15) ein quer zur Transportrichtung verlaufender Aufsichtbereich (30) zum vorzugsweise zeilenweisen Bedrucken des Dokuments (13) vorgesehen ist, **dadurch gekennzeichnet, dass** ein Erfassungselement (40) des Scanners (12), das vorzugsweise in Form einer Kamera (41, 41') ausgebildet ist, auf den Aufsichtbereich (30) zum vorzugsweise zeilenweisen Scannen des Dokumentes (13) gerichtet ist, und dass die Kamera (41') mit ihrer optischen Achse (OA) im wesentlichen senkrecht zu der Transportbahn (15), insbesondere dem Aufsichtbereich (30), ausgerichtet ist, wobei sie um einen so großen Scanabstand (d1) von der Transportbahn (15) und hinter einem Druckerelement (35) eines Druckers (11) entfernt angeordnet ist, dass zwischen der Kamera (41') und der Transportbahn (15) ein Arbeitsbereich (ARB) definiert ist, in dem sich ein Wagen (36) des Druckers (11) über die Transportbahn (15), insbesondere den Aufsichtbereich (30), bewegen kann.

10. Einrichtung nach Anspruch 9, **dadurch gekennzeichnet, dass** die vorzugsweise horizontale Dokumenten-Transportbahn (15) durch zwei in geringem Abstand übereinander angeordnete Führungsblechanordnungen (17-19; 21-24) gebildet ist und dass der Aufsichtbereich durch einen rechteckförmigen Querschlitz (30) in einem Führungsblech (22) der oberen Führungsblechanordnung (21-24) gebildet ist.

11. Einrichtung nach mindestens einem der Ansprüche 9 bis 10, **dadurch gekennzeichnet, dass** ein Druckerelement (35) des Druckers (11) eine an einem Wagen (36) verfahrbar gehaltene Tintenpatrone (37) aufweist, die in Ruheposition außerhalb des Aufsichtbereichs (30) angeordnet ist, und dass die Erfassungskamera (41) vorzugsweise in Form einer Zeilenkamera oberhalb des Druckerelementes (35) ortsfest angeordnet ist.

12. Einrichtung nach mindestens einem der Ansprüche 9 bis 11, **dadurch gekennzeichnet, dass** das Druckerelement (35) und das Scannerelement (40) vorzugsweise zeilenweise versetzt zugeschaltet ist.

13. Einrichtung (10) nach mindestens einem der Ansprüche 9 bis 12, wobei der Scanner (12) bzw. die Kamera (41, 41') einen Flächen-Bildsensor (400) mit mehreren Bildpunktzeilen und mehreren Bildpunktspalten aufweist, und wobei der Flächen-Bildsensor (400) vorzugsweise so angeordnet ist, dass sich seine Bildpunktzeilen im wesentlichen parallel zu einem Aufsichtbereich (30) erstrecken.

## Claims

1. A method for detecting and printing preferably paper documents (13), **characterized in that** the document (13), after being inserted into a combined printer/scanner device (10), is scanned in a first step, printed with an additional piece of information in a second step, and scanned again and stored in memory in an ensuing third step, and in the individual steps the document (13) follows the same feed path (15) back and forth in the forward and backward directions, and a camera (41') is oriented with its optical axis (OA) essentially perpendicular to the feed path (15), in particular to the observation area (30), and the camera is located spaced apart from the feed path (15) and behind a printer element (35) of a printer (11) by such a great scanning distance (d1) that a working area (ARB), in which a carriage (36) of the printer (11) moves via the feed path (15), and in particular via the observation area (30), is defined between the camera (41') and the feed path (15).

2. The method of claim 1, **characterized in that** in the first step, the document (13) is at least partially scanned in content and stored in memory.

3. The method of claim 1 or 2, wherein the first step of scanning or contactless sampling is performed by means of an optical area sensor, in particular a CMOS image sensor or a CCD image sensor, and the area sensor has an essentially matrixlike array of many pixels, which are arranged in lines and rows, and preferably only one or a few pixel lines are read in at a time before the document is moved onward in the feed path by a predeterminable feed rate for scanning or sampling sample a subsequent line of the document.

4. The method of claims 1 and 2, **characterized in that** the additional information is read out from the memory in which various additional pieces of information are assigned to various contents detected in the first step.

5. The method of at least one of the foregoing claims, **characterized in that** the document (13) is moved back and forth, forward and backward . between the individual steps.

6. The method of claim 5, **characterized in that** the document (13) in the first step is scanned, preferably line by line, in the forward leg, and in the second step in the return leg is printed, preferably line by line, and in the third step, it is scanned preferably line by line in the forward leg and in the return leg it is ejected.

7. The method of claim 5, **characterized in that** the document (13) in the first step is scanned, preferably line by line, in the forward leg and after that in the return leg is fed to a waiting position, and in the second step it is printed in the forward leg, and in the third step it is scanned in the return leg and ejected.

8. The method of claim 5, **characterized in that** the document (13), in the second and third steps, is printed and scanned with a line by line offset.

9. A device in which in the document feed path (15) an observation area (30) extending transversely to the feeding direction is provided for preferably line by line printing of the document (13), **characterized in that** a detection element (40) of the scanner (12), which is preferably embodied in the form of a camera (41, 41'), is aimed at the observation area (30) for preferably line by line scanning of the document (13), and that the camera (41') is oriented with its optical axis (OA) essentially perpendicular to the feed path (15), in particular to the observation area (30), and it is located away from the feed path (15) and downstream of a printer element (35) of a printer (11) by such a great scanning spacing (d1) that a working area (ARB) is defined between the camera (41') and the feed path (15), in which working area a carriage (36) of the printer (11) can move via the feed path (15), in particular the observation area (30).

10. The device of claim 9, **characterized in that** the preferably horizontal document feed path (15) is formed by two guide plate assemblies (17-19; 21-24) located at a slight spacing one above the other, and that the observation area is formed by a rectangular crosswise slot (30) in a guide plate (22) of the upper guide plate assembly (21-24).

11. The device of at least one of claims 9 through 10, **characterized in that** a printer element (35) of the printer (11) has an ink cartridge (37), retained movably on a carriage (36), which ink cartridge, in the position of repose, is located outside the observation area (30), and that the scanner camera (41), preferably in the form of a line scan camera, is located stationary above the printer element (35).

12. The device of at least one of claims 9 through 11, **characterized in that** the printer element (35) and the scanner element (40) are preferably connected with a line by line offset.

13. The device (10) of at least one of claims 9 through 12, wherein the scanner (12) or the camera (41, 41') has an area image sensor (400) having a plurality of pixel lines in a plurality of pixel columns, and wherein the area image sensor (400) is preferably located such that its pixel lines extend essentially parallel to an observation area (30).

## Revendications

1. Procédé destiné à saisir et à imprimer des documents (13) de préférence en papier, **caractérisé par le fait que** le document (13), après qu'il a été introduit dans un dispositif imprimante/scanneur combiné (10), est scanné dans une première étape, est imprimé d'une information additionnelle dans une deuxième étape et est scanné une nouvelle fois et mis en mémoire dans une troisième étape subséquente, dans les étapes individuelles, le document (13) parcourant en avant et en arrière, en exerçant un mouvement aller et retour, le même trajet de transport (15), dans lequel une caméra (41') est orientée de manière à ce que son axe optique (OA) soit pour l'essentiel perpendiculaire au trajet de transport (15), en particulier à la zone de vue de dessus (30), dans lequel la caméra est espacée d'une distance de balayage (d1) tellement importante du trajet de transport (15) et derrière un élément d'imprimante (35) d'une imprimante (11) qu'une zone de travail (ARB) est définie entre la caméra (41') et le trajet de transport (15), dans laquelle un chariot (36) de l'imprimante (11) se déplace sur le trajet de transport (15), en particulier la zone de vue de dessus (30).

2. Procédé selon la revendication 1, **caractérisé par le fait que**, dans la première étape, le document (13) est saisi et mémorisé au moins en partie quant au contenu.

3. Procédé selon la revendication 1 ou 2, dans lequel la première étape consistant à scanner ou bien à balayer sans contact est mise en oeuvre au moyen d'un capteur optique de surface, en particulier d'un capteur d'image CMOS ou d'un capteur d'image CCD, dans lequel le capteur de surface dispose d'un agencement pour l'essentiel de type matrice d'une pluralité de pixels qui sont disposés en lignes et en colonnes, et dans lequel, de préférence, respectivement seulement une ou peu de lignes de pixels sont lues avant que le document soit avancé d'une avance prédéfinissable dans le trajet de transport afin de scanner ou bien de balayer une linge suivante du document.

4. Procédé selon les revendications 1 et 2, **caractérisé par le fait que** l'information additionnelle est lue dans une mémoire dans laquelle des informations additionnelles différentes sont associées à des contenus différents saisis dans la première étape.

5. Procédé selon l'une au moins des revendications précédentes, **caractérisé par le fait que**, entre les étapes individuelles, le document (13) est animé d'un mouvement de va-et-vient en allant en avant et en arrière.

6. Procédé selon la revendication 5, **caractérisé par le fait que**, dans la première étape, le document (13) est de préférence scanné ligne par ligne lors du mouvement en avant et, dans la deuxième étape, il est de préférence imprimé ligne par ligne lors du mouvement en arrière, et, dans la troisième étape, il est de préférence scanné ligne par ligne lors du mouvement en avant et est éjecté lors du mouvement en arrière.

7. Procédé selon la revendication 5, **caractérisé par le fait que**, dans la première étape, le document (13) est de préférence scanné ligne par ligne lors du mouvement en avant et est transporté ensuite dans une position d'attente lors du mouvement en arrière, et, dans la deuxième étape, il est imprimé lors du mouvement en avant et, dans la troisième étape, il est scanné et éjecté lors du mouvement en arrière.

8. Procédé selon la revendication 5, **caractérisé par le fait que**, dans les deuxième et troisième étapes, le document (13) est imprimé et scanné en décalage ligne par ligne.

9. Dispositif dans lequel, dans le trajet de transport de document (15), une zone de vue de dessus (30) s'étendant transversalement à la direction de transport est prévue pour imprimer le document (13) de préférence ligne par ligne, **caractérisé par le fait qu'**un élément de détection (40) du scanneur (12), qui, de préférence, est réalisé sous forme d'une caméra (41, 41'), est dirigé sur la zone de vue de dessus (30) pour scanner le document (13) de préférence ligne par ligne, et que ladite caméra (41') est orientée de manière à ce que son axe optique (OA) soit pour l'essentiel perpendiculaire au trajet de transport (15), en particulier à la zone de vue de dessus (30), elle étant espacée d'une distance de balayage (d1) tellement importante du trajet de transport (15) et derrière un élément d'imprimante (35) d'une imprimante (11) qu'une zone de travail (ARB) est définie entre la caméra (41') et le trajet de transport (15), dans laquelle un chariot (36) de l'imprimante (11) peut se déplacer sur le trajet de transport (15), en particulier la zone de vue de dessus (30).

10. Dispositif selon la revendication 9, **caractérisé par le fait que** le trajet de transport de document (15) de préférence horizontal est constitué par deux ensembles de tôles de guidage (17 - 19; 21 - 24) superposés à faible distance et que la zone de vue de dessus est formée par une fente transversale (30) rectangulaire dans une tôle de guidage (22) de l'ensemble de tôles de guidage (21 - 24) supérieur.

11. Dispositif selon l'une au moins des revendications 9 à 10, **caractérisé par le fait qu'**un élément d'imprimante (35) de l'imprimante (11) comprend une cartouche d'encre (37) qui est maintenue de manière déplaçable sur un chariot (36) et qui, en position de repos, est disposée hors de la zone de vue de dessus (30), et que la caméra de détection (41), de préférence sous forme d'une caméra linéaire, est disposée à poste fixe au-dessus de l'élément d'imprimante (35).

12. Dispositif selon l'une au moins des revendications 9 à 11, **caractérisé par le fait que** ledit élément d'imprimante (35) et ledit élément de scanneur (40) est raccordé de préférence d'une manière décalée ligne par ligne.

13. Dispositif (10) selon l'une au moins des revendications 9 à 12, dans lequel le scanneur (12) ou bien la caméra (41, 41') présente un capteur d'image de surface (400) ayant une pluralité de lignes de pixels et une pluralité de colonnes de pixels, et dans lequel, de préférence, ledit capteur d'image de surface (400) est agencé de telle manière que ses lignes de pixels s'étendent pour l'essentiel parallèlement à une zone de vue de dessus (30).
